# FASCICULE DE BREVET EUROPEEN

(11) **EP 4 085 030 B1**
(45) Date de publication et mention de la délivrance du brevet: **18.12.2024**
(21) Numéro de dépôt: 20830000.4
(22) Date de dépôt: 27.11.2020
(51) Int. Cl.: C03B 37/02, C03C 3/16, C05B 13/02, C03C 4/00, C03C 13/00

(54) **PROCÉDÉ DE FABRICATION DE FIBRE DE VERRE DE PHOSPHATE**
VERFAHREN ZUM PRODUZIEREN VON PHOSPHATGLASFASER
METHOD FOR PRODUCING PHOSPHATE GLASS FIBRE

(30) Priorité: 31.12.2019 MA 47836
(43) Date de publication de la demande: 09.11.2022
(73) Titulaire: École Supérieure des Industries du Textile Et de l'Habillement (ESITH), Casablanca, 20190 (MA); Universite Hassan II de Casablanca (UH2C), Casablanca (MA); Universite Mohamed VI Polytechnique (UM6P), Ben Guerir, 43150 (MA)
(72) Inventeur: EL BOUCHTI, Mehdi, Casablanca, 20190 (MA); SALOUMI, Nezha, Casablanca, 20190 (MA); HANNACHE, Hassan, Casablanca 9167 (MA); OUMAM, Mina, Casablanca 9167 (MA); JAMALEDDINE, Oumaima, Casablanca 9167 (MA); LAHLOU, Mohamed, Casablanca, 20190 (MA); TAMRAOUI, Youssef, Guerir, 43150 (MA); CHERKAOUI, Omar, Casablanca, 20190 (MA)
(74) Mandataire: Mellet, Valérie Martine
(86) Numéro de dépôt international: PCT/MA2020/000014
(87) Numéro de publication internationale: WO 2021/137679

(56) Documents cités:
- DE-A1- 102009 009 868
- US-A- 4 334 908
- EDDINE ET AL.: "Effect of the chemical composition on the structural and mechanical properties of phosphate glass fibers based on natural phosphate", JOURNAL OF ALLOYS AND COMPOUNDS, vol. 817, 152808, 13 November 2019 (2019-11-13), pages 1 - 13, XP086018598, DOI: 10.1016/j.jallcom.2019.152808

## Description

### Domaine technique

la présente invention concerne le domaine des fibre de verre, en particulier elle se rapporte à un procédé de fabrication de fibre de verre de phosphate à usage dans le domaine du textile technique, et l'utilisation d'un tel textile dans des applications en isolation dans le bâtiment et pour l'agriculture.

### Technique antérieure

Le verre est issu, principalement, de la fusion de silicates. La part réservée aux autres familles de verre dit « verres spéciaux », notamment les verres phosphates, est infime jusqu'à aujourd'hui.

Les verres de phosphate font l'objet d'une recherche scientifique soutenue ces dernières années. Ils présentent un intérêt dans divers domaines industriels de pointe comme le domaine médical (biocompatible), l'électronique et l'optique (les fibres optiques). Cependant, il importe d'évoquer le problème de la durabilité chimique qui est une condition impérative au développement de ce type de matériaux pour élargir son champ d'application à l'instar des verres de silicates.

Pour obtenir des verres stables, en particulier vis-à-vis de l'eau, leur composition peut être optimisée en jouant sur la modification du réseau phosphaté par l'introduction d'oxydes acides (B2O3, Al2O3) ou même d'amphotères (ZnO, TiO2, Nb2O5) ou sur le remplacement partiel de l'oxygène par d'autres ligands principalement l'azote.

Des tentatives pour exploiter les verres de phosphate pour des applications médicales, en particulier pour la régénération des os ont été divulguées par le document du FR2548658A1 qui a pour objet une fibre de verre pour le remplissage ou garnissage d'un défaut ou d'une portion creuse dans un os, comprenant du phosphate de calcium comme ingrédient principal. La fibre de verre selon l'invention a un potentiel zêta négatif, le phosphate de calcium a un rapport molaire Ca/P de moins de 0,6 et pas moins de 0,2 et la teneur totale en CaO+P2O5 est de pas moins de 80%en poids. Le mono filament selon le document de l'invention peut être tissé pour former une charge tissée destinée à obturer un défaut ou une cavité de l'os. La fibre peut subir un traitement par le Dépôt de couche de phosphate de calcium sur la surface de la fibre avec rapport molaire Ca/P compris entre 0,8 et 1,7 et avec un pH compris entre 2 et 7. Un usage aussi d'oxydes comme Al2O3 est aussi possible.

La fibre obtenu selon ce procédé est destinée pour un usage spécifique et ne résout pas les problèmes spécifiques aux verres de phosphate à savoir la durabilité chimique qui est une condition impérative au développement de ce type de matériaux. Le procédé ne permet pas aussi d'optimiser les paramètres de production pour rendre compétitive la production à grande échelle de telle fibre, en particulier pour usage industriel dans le bâtiment, l'agriculture et l'automobile. Ceci est du principalement à l'usage du phosphate de calcium (E341) purifié comme ingrédient principal pour garantir la biocompatibilité de la fibre avec l'os.

D'où l'intérêt de la présente invention qui se veut un procédé alternatif pour produire en masse des fibres de verre de phosphate avec des couts raisonnables à partir d'ingrédients disponible en masse comme le phosphate naturel, les argile ..etc. L'invention concerne aussi de nouveaux usages de la fibre de verre de phosphate en particulier pour le bâtiment et l'agriculture.

Eddine et al. Dans « Effect of the chemical composition on the structural and mechanical properties of phosphate glass fibers based on naturel phosphate" décrit des fibres de verre phosphatées à base de phosphate naturel et de différents minéraux pouvant être utilisées comme formulations d'engrais à libération lente. Ces fibres ont été développées en faisant fondre le verre de phosphate et en l'étirant en fibres fines par une machine extrudée à monofilament.

Le document DE102009009868A1 décrit un verre de phosphate filable a la composition d'oxyde suivante (% en moles) : phosphore (38-63), calcium (9-52), magnésium (9-52), potassium (9-52), aluminium (0,1-12), silicium ( 0,1-10), fer (0,1-8), bore (0,1-5).

Le document US4334908 décrit une composition de matière destinée à être utilisée comme engrais vitreux comprenant un constituant vitreux soluble comprenant les ingrédients suivants : 35 à 55 moles %, P2O5; moins de 10 moles %, K2O ; et le reste à 100 moles %, CaO et/ou MgO. Le reste de la composition, le cas échéant, est constitué par des ajouts facultatifs de proportions nutritives d'un ou plusieurs micronutriments sous forme assimilable par les plantes, et/ou des ajouts facultatifs d'une ou plusieurs matières de charge inertes végétales. De telles compositions présentent des taux de libération de nutriments favorables. L'invention concerne également des compositions de matière adaptées pour être utilisées comme engrais végétal qui comprennent un matériau vitreux soluble libérant des nutriments végétaux sous forme expansée ou cellulaire, ainsi que des procédés de culture de plantes utilisant de telles compositions.

Un autre objectif est de fabriquer des moyens de fertilisation contrôlée dans le temps à base de textiles fabriqués à partir de la fibre de verre de phosphate de la présente invention.

### Résumé de l'invention

Le procédé selon la présente invention concerne un procédé d'élaboration de fibre de verre de de phosphate tel que défini selon la revendication 1.

Ainsi, la fabrication de fibre de verre de phosphate se fait à partir d'un mélange d'un engrais de type TSP ou PK, de l'Acide phosphorique ( ex. AP54 non filtré et non purifié) et d'additifs de dopage contenant des oligo-nutriments comme l'Argile rouge, l'argile verte, le Kaolin, le Ghassoul ou une cendre volante.

Le choix de l'engrais permet de contrôler la composition finale du verre grâce au pourcentage du P₂O₅ dans le mélange final. Ce pourcentage peut être ajusté grâce à l'acide phosphorique. Aussi l'ajout d'additif comme les argiles permet de renforcer le mélange avec les oxydes nécessaires pour améliorer la durabilité chimique de la fibre de verre de phosphate.

Le mélange obtenu subit ensuite un prétraitement à une température comprise entre 100 et 200 °C puis une cuisson à une température comprise entre 950 jusqu'à 1100 °C Suivie d'une trempe à environ 300 °C. Le verre obtenu est ensuite utilisé pour la préparation des fibres par procédé de filage par étirage à l'état fondu à des températures comprises entre 550 à 750°C. Selon le procédé de l'invention, la fibre de verre de phosphate obtenue peut subir un traitement de fonctionnalisation par ajout d'adjuvants ou d'oxydes.

### Brève description des dessins

La suite de la description sera faite en référence aux figures en annexe données à titre d'exemples non limitatifs pour illustrer les caractéristiques et avantages de la présente invention, parmi lesquelles :
Figure 1 : diagramme d'obtention des engrais à partir de la roche phosphatée
Figure 2 : le schéma du procédé depuis le mélange jusqu'à la production de la fibre de verre de phosphate

### Description d'un mode de réalisation

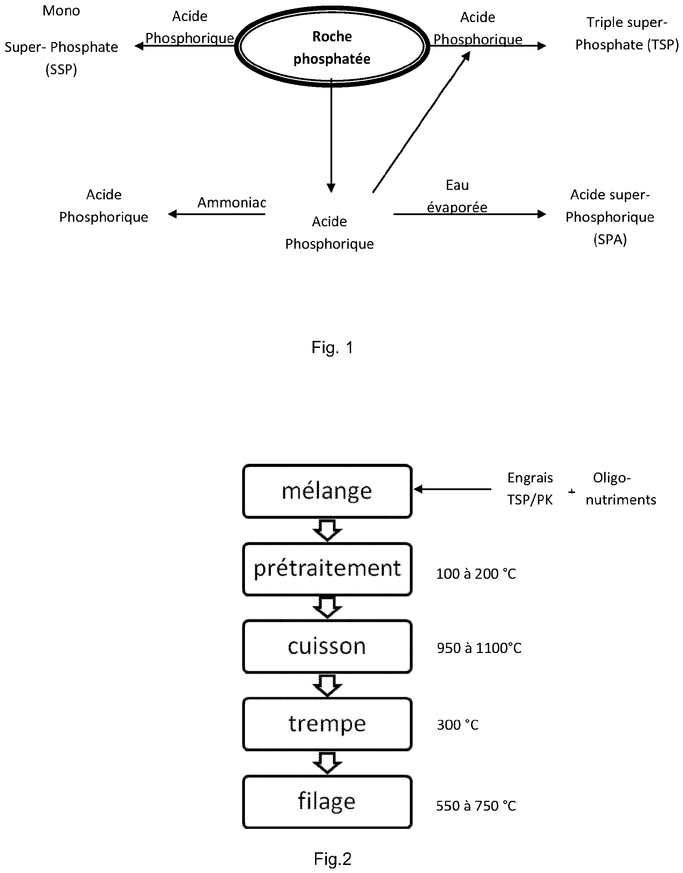

La fibre de verre de phosphate selon l'invention est produite à partir d'ingrédients qui font partie de l'industrie phosphatière. L'ingrédient principal est un composé phosphaté, en locurence un engrais de type TSP (ou PK) obtenu à partir de la roche phosphatée (figure 1). La roche phosphatée est la matière première utilisée dans la fabrication de la plupart des engrais phosphatés sur le marché.

Avec accès à des minerais riches en phosphore, le Maroc (OCP), la Chine et les US sont les acteurs les plus importants dans l'industrie du phosphate.

La roche provenant des mines est d'abord envoyée aux unités de valorisation pour séparer le sable et l'argile et pour éliminer les impuretés. La plupart des procédés sont humides pour faciliter le transport et pour réduire la poussière.

Un acide phosphorique faible (40-55%) est produit par la réaction de roche phosphatée avec de l'acide sulfurique, à l'aide d'un procédé humide. L'acide phosphorique obtenu est ensuite utilisé dans la production d'une série d'engrais liquides ou solides. Les plus importantes sont les superphosphates simples et triples (SSP, TSP) et les phosphates d'ammonium (MAP, DAP). Généralement les unités de production utilisent des procédés flexibles, permettant la fabrication d'au moins deux produits avec des lignes de production communes (par exemple TSP et DAP combiné).

SSP est simple à produire, mais il est actuellement moins populaire. TSP granulé résulte de la réaction de la roche phosphatée de l'acide phosphorique, avec de très bonnes propriétés de stockage et manutention.

Economique et à forte teneur en éléments nutritifs, les phosphates d'ammonium tel que le mono- et le di-ammonium phosphate (MAP, DAP) sont un autre choix d'engrais populaire. Ils sont obtenus lorsque l'ammoniac (liquide ou gazeux) est ajouté à l'acide phosphorique faible.

La roche phosphatée est de composition de 29,4% de P₂O₅, 47% de CaO, 8% de SiO₂, 0,6 % de MgO et 15% de H₂O.

Tel que illustré à la figure 2, l'engrais est mélangé par méthode de fusion directe avec de l'acide phosphorique, avec des additifs choisis parmi de l'argile rouge, de l'Argile vert, du Kaolin, du Ghassoul ou de la cendre volante.

Selon un aspect de l'invention, le mélange doit comporter un pourcentage de P₂O₅ compris entre 45 et 60% de préférence 54%. L'ajout de l'acide phosphorique est utilisé dans le but de maîtriser ce pourcentage. Le contrôle de ce pourcentage se fait à la fin du processus sur un échantillon de la fibre.

Selon un autre aspect, les additifs choisis parmi de l'argile rouge, de l'Argile vert, du Kaolin, du Ghassoul ou de la cendre volante sont ajoutés à un pourcentage allant jusqu'à 15% en poids total du mélange. L'ajout de ces additifs a pour objet d'enrichir la composition de la fibre de verre par le dopage avec des oligo-éléments (Oxydes) contenus dans ces additifs. Le tableau 1 ci-dessous montre la composition de différentes argiles en oxydes:

**Tableau 1 : composition en oxydes des différents additifs**

| **Les oxydes** | **Roche** | **Argile Rouge** | **Argile Verte** | **Felspah** | **Cendre Volante** |
|---|---|---|---|---|---|
| P2O5 | 34.97 | 0.16 | 0.05 | - | 0.96 |
| CaO | 58.88 | 3.74 | 0.15 | 0.70 | 3.19 |
| SiO2 | 3.67 | 60.50 | 65.24 | 68.57 | 56.76 |
| Al2O3 | 0.44 | 17.71 | 1.54 | 16.82 | 24.04 |
| Fe2O3 | 0.26 | 7.36 | 0.96 | 0.09 | 8.28 |
| MgO | 0.70 | 3.99 | 28.98 | 1.45 | 0.96 |
| K2O | 0.08 | 5.10 | 0.27 | 4.54 | 3.11 |
| Na2O | 0.92 | 0.55 | 1.58 | 7.79 | - |
| TiO2 | 0.03 | 0.76 | - | 0.04 | 1.82 |
| MnO | 0.01 | 0.11 | 0.12 | - | - |
| ZnO | 0.03 | - | - | - | - |

Le mélange obtenu est placé dans un four pour un prétraitement à une température comprise entre 100 et 200 °C pendant une durée d'environ une heure pour éliminer H₂O et CO₂,

Le mélange est ensuite subit une cuisson à une température comprise entre 950 jusqu'à 1100 °C pendant environ 2 heures

Le mélange fondu est mis pour trempe dans un support ayant une température de 300°C.

Après le repos, la préparation des fibres à partir du bloc de verre est réalisée par procédé de filage par étirage à l'état fondu à des températures comprises entre 550 et 750°C

Les fibres obtenues selon le procédé de l'invention présentent l'avantage d'être compatible avec l'usage en agriculture comme source de nutriments (fertilisation) grâce à une libération contrôlée des éléments N, P, K contenus dans la fibre de verre de phosphate.

## Revendications

1. Procédé d'élaboration de fibre de verre de phosphate **caractérisé en ce qu'**il comporte les étapes suivantes :
a) Préparation d'un mélange comprenant au moins un engrais du type Triple superphosphate ou Phosphore/Potassium, de l'Acide phosphorique et des additifs de dopages contenant des oligo-nutriments, les additifs de dopage étant choisis parmi l'argile Rouge, l'argile verte, le Kaolin, le Ghassoul ou une cendre volante,
b) le mélange obtenu est placé dans un four pour un prétraitement à une température comprise entre 100 et 200 °C pendant une durée d'environ une heure pour éliminer H₂O et CO₂,
c) ensuite, la cuisson du mélange de (b) à une température comprise entre 950 et 1100 °C pendant environ 2 heures,
d) le mélange fondu de l'étape c) subi une trempe dans un support à 300°C,
e) préparation des fibres à partir du bloc de verre obtenu à l'étape d) par procédé de filage par étirage à l'état fondu à des températures comprises entre 550 et 750°C.

2. Procédé selon la revendication 1 **caractérisé en ce que** la fibre obtenue à l'étape d) doit contenir un taux de P₂O₅ compris entre 45% et 60% en poids total ; de préférence, 54% en poids total.

3. Procédé selon la revendication 1 ou 2 **caractérisé en ce que** le taux des additifs de dopage dans le mélange est inférieur à 15% en poids total.

## Patentansprüche

1. Verfahren zur Herstellung von Phosphatglasfasern, **dadurch gekennzeichnet, dass** es die folgenden Schritte umfasst:
a) das Herstellen einer Mischung, die mindestens ein Düngemittel vom Typ Triple Superphosphate oder Phosphor/Kalium, Phosphorsäure und Dotierungszusätze, die Spurennährstoffe enthalten, umfasst, wobei die Dotierungszusätze aus Rotem Ton, Grünem Ton, Kaolin, Lavaerde oder Flugasche ausgewählt werden;
b) das Einführen der erzielten Mischung in einen Ofen zur Vorbehandlung bei einer Temperatur zwischen 100 und 200 °C für eine Dauer von etwa einer Stunde, um H₂O und CO₂ zu entfernen;
c) anschließend das Brennen der Mischung aus (b) bei einer Temperatur zwischen 950 und 1100 °C für etwa 2 Stunden;
d) das Abschrecken der geschmolzenen Mischung aus Schritt c) in einem Träger bei 300 °C;
e) das Herstellen von Fasern aus dem in Schritt d) erzielten Glasblock durch ein Spinnverfahren, bei dem die Fasern durch Ziehen in der Schmelze bei Temperaturen zwischen 550 und 750 °C gesponnen werden.

2. Verfahren nach Anspruch 1, **dadurch gekennzeichnet, dass** die in Schritt d) erzielte Faser einen P₂O₅-Gehalt zwischen 45 % und 60 % Gesamtgewicht enthalten muss; vorzugsweise 54 % Gesamtgewicht.

3. Verfahren nach Anspruch 1 oder 2, **dadurch gekennzeichnet, dass** der Anteil der Dotierungszusätze in der Mischung weniger als 15 % Gesamtgewicht beträgt.

## Claims

1. Process for producing phosphate glass fiber, **characterized in that** it comprises the following steps
a) Preparation of a mixture comprising at least one fertilizer of the triple superphosphate or phosphorus/potassium type, phosphoric acid and doping additives containing oligo-nutrients, the doping additives being chosen from red clay, green clay, kaolin, ghassoul or fly ash,
b) the resulting mixture is placed in an oven for pre-treatment at a temperature of between 100 and 200°C for a period of approximately one hour to eliminate H₂O and CO₂,
c) then baking the mixture from (b) at a temperature of between 950 and 1100°C for approximately 2 hours,
d) the molten mixture from step c) is quenched in a holder at 300°C,
e) preparation of fibers from the glass block obtained in step d) by a melt-drawing spinning process at temperatures of between 550 and 750°C.

2. Process according to claim 1, **characterized in that** the fiber obtained in step d) must contain a P₂O₅ content of between 45% and 60% by total weight; preferably 54% by total weight.

3. Process according to claim 1 or 2, **characterized in that** the level of doping additives in the mixture is less than 15% by total weight.
